(19) **Europäisches Patentamt**
**European Patent Office**
**Office européen des brevets**

(11) **EP 1 896 747 B1**

(12) **FASCICULE DE BREVET EUROPEEN**

(45) Date de publication et mention
de la délivrance du brevet:
**12.05.2010 Bulletin 2010/19**

(51) Int Cl.:
*F16D 48/06* (2006.01)

(21) Numéro de dépôt: **06778971.9**

(22) Date de dépôt: **23.06.2006**

(86) Numéro de dépôt international:
**PCT/FR2006/050626**

(87) Numéro de publication internationale:
**WO 2007/000553 (04.01.2007 Gazette 2007/01)**

(54) **PROCEDE DE PILOTAGE D'UN DISPOSITIF DE COUPLAGE ENTRE UN ARBRE D'ENTREE ET UN ARBRE DE SORTIE**

VERFAHREN ZUR STEUERUNG EINER KOPPLUNGSVORRICHTUNG ZWISCHEN EINER EINGANGSWELLE UND EINER AUSGANGSWELLE

METHOD FOR CONTROLLING A COUPLING DEVICE BETWEEN AN INPUT SHAFT AND AN OUTPUT SHAFT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.06.2005 FR 0506513**

(43) Date de publication de la demande:
**12.03.2008 Bulletin 2008/11**

(73) Titulaire: **PEUGEOT CITROËN AUTOMOBILES S.A.**
**78140 Vélizy Villacoublay (FR)**

(72) Inventeurs:
• **LE NEINDRE, Yvan**
**F-75017 Paris (FR)**
• **ROCQ, Gaétan**
**F-78125 La Boissiere Ecole (FR)**

(56) Documents cités:
**EP-A- 1 437 520      EP-A- 1 510 717**
**DE-A1- 19 652 244**

**Description**

La présente invention est relative au pilotage d'un dispositif de couplage entre un arbre d'entrée entraîné par un moteur et un arbre de sortie pouvant transmettre un couple maximal en fonction de la position d'un actionneur du dispositif de couplage conformément à une loi de comportement du moyen de couplage.

Le pilotage d'une chaîne de traction hybride, constituée par exemple d'un moteur thermique couplé à une machine électrique par l'intermédiaire d'un embrayage, et entraînant un arbre d'entrée dans une boîte de vitesses qui entraîne elle-même les roues d'un véhicule automobile, nécessite le pilotage en couple des organes moteurs, à savoir le moteur thermique et la machine électrique, de façon à respecter au mieux la volonté du conducteur exprimée sous forme de couples à fournir à la roue.

Dans une chaîne de traction hybride, le couple à fournir à la roue est réparti entre le moteur thermique et la machine électrique en fonction des conditions particulières de fonctionnement du véhicule, afin d'optimiser notamment la consommation d'énergie de la chaîne de traction.

Afin de piloter cet ensemble, il est nécessaire de faire varier la répartition du couple entre le moteur thermique et la machine électrique. Cela nécessite de pouvoir coupler et découpler le moteur thermique et la machine électrique à l'aide d'un moyen de couplage entre le moteur thermique et la machine électrique. Cet organe de couplage, qui est en général un embrayage à friction, doit être piloté de façon à déterminer avec précision au moins pendant les périodes de glissement, le couple qui est transmis par l'embrayage.

Les chaînes de traction conventionnelles comportent aussi des moyens de couplage/découplage qui peuvent être pilotés. Lorsque les moyens de couplage/découplage sont pilotés, le pilotage doit également contrôler le couple transmis, en particulier lors du démarrage ou lors des changements de rapport de boîte de vitesse.

Afin de pouvoir piloter convenablement un tel dispositif, il est nécessaire de connaître avec précision une loi de fonctionnement de l'embrayage qui permet de déterminer la relation qu'il y a entre la position d'un actionneur de l'embrayage et le couple maximal transmissible par l'embrayage lorsqu'il est en période de glissement.

C'est ainsi que les dispositifs de pilotage de telles chaînes de traction utilisent une loi de comportement de l'embrayage qui donne la relation entre la position de l'organe de commande de l'embrayage et le couple maximal transmissible par ledit embrayage. Mais de telles lois sont évolutives au cours du temps pour différentes raisons, en particulier du fait de l'échauffement de l'embrayage lorsqu'il est utilisé fréquemment, du fait de son usure ou des dispersions de caractéristiques de fabrication.

Afin de prendre en compte l'évolution des lois de comportement de l'embrayage, on est amené à prévoir des procédures de détermination notamment du point de léchage c'est-à-dire de la position de l'organe de commande qui permet d'assurer le début du contact entre les deux plateaux d'embrayage.

Cette façon de procéder présente cependant l'inconvénient d'être assez imprécise. On constate en particulier une très grande sensibilité de la procédure de détermination du point de léchage. Il en résulte que l'utilisation d'une telle procédure dans l'utilisation réelle de véhicules conduit à des irrégularités de fonctionnement inacceptables, de sorte qu'il est préférable de conserver des lois de comportement de l'embrayage sans prendre en compte les variations du point de léchage. C'est notamment le cas du procédé décrit dans le document EP 1 437 520 A2. Cependant, en procédant ainsi, on observe également une très grande irrégularité dans le pilotage de l'embrayage.

Le but de la présente invention est de remédier à cet inconvénient en proposant un moyen pour adapter les lois de comportement de l'embrayage en fonction de l'utilisation de l'embrayage de façon à avoir, à chaque instant, la meilleure modélisation possible du comportement de l'embrayage afin d'obtenir un bon pilotage de l'embrayage.

A cet effet, l'invention a pour objet un procédé de pilotage d'un dispositif de couplage entre un arbre d'entrée entraîné par un moteur et un arbre de sortie, pouvant transmettre un couple maximal fonction de la position d'un actionneur du dispositif de couplage, conforme à la revendication 1.

En outre, on effectue un lissage de la fonction d'interpolation.

De préférence, la loi de comportement à chaque instant du dispositif de couplage est égale à la loi de comportement intermédiaire à chaque instant du dispositif de couplage.

Par exemple, la première loi de référence est la loi de comportement du moyen de couplage lorsqu'il est neuf et froid et la deuxième loi de référence est la loi de comportement du moyen de couplage lorsqu'il est neuf et chaud.

En outre, on effectue une interpolation entre la loi de comportement intermédiaire et une troisième loi de référence correspondant au dispositif de couplage usé, en utilisant un coefficient d'interpolation$\beta$, qu'on adapte en utilisant un deuxième gain $K\beta$, de signe contraire au premier gain $K\alpha$ et petit en valeur absolue par rapport au premier gain.

De préférence, on effectue l'adaptation du deuxième coefficient d'interpolation $\beta$ de façon continue tout au long de la vie du dispositif de couplage et on effectue l'adaptation du premier coefficient de couplage, période d'utilisation du dispositif par période d'utilisation, en le réinitialisant au début de chaque période d'utilisation.

Le dispositif de couplage est par exemple un embrayage commandé et il peut être incorporé dans une chaîne de traction, notamment une chaîne de traction hybride, d'un véhicule automobile.

L'invention concerne également un dispositif de couplage comprenant le moyen de pilotage adapté pour mettre en oeuvre le procédé selon l'invention. Le dispositif de couplage est, pare exemple, incorporé à la chaîne de traction d'un véhicule automobile.

L'invention va maintenant être décrite de façon plus précise mais non limitative en regard des figures annexées dans lesquelles :

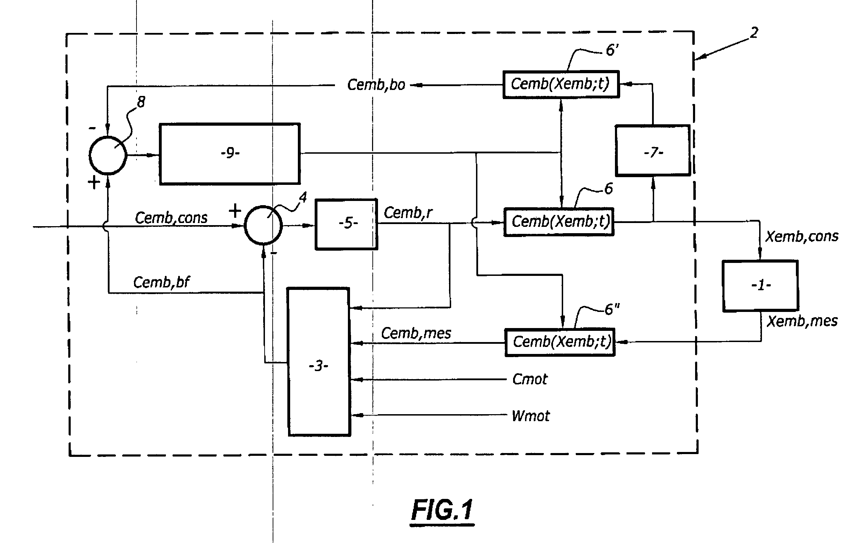

- la figure 1 est un schéma de principe d'une commande d'embrayage,
- la figure 2 est une vue schématique du principe de l'interpolation double utilisée dans un procédé de pilotage d'un embrayage,
- la figure 3 est une représentation schématique des fonctions d'interpolation utilisées dans un procédé de pilotage d'un embrayage, et
- la figure 4 est une représentation schématique des fonctions d'interpolation utilisées dans le pilotage d'un embrayage après un certain temps d'utilisation.

Pour piloter l'embrayage pilotable 1, on utilise un dispositif de pilotage repéré généralement par 2 et qui délivre à l'embrayage une consigne de positionnement du dispositif de commande de l'embrayage Xemb,cons. Ce dispositif 2 de pilotage de l'embrayage reçoit en entrée une consigne de couple pour l'embrayage Cemb,cons. Pour déterminer la consigne Xemb,cons de positionnement du moyen de pilotage de l'embrayage, le dispositif de pilotage 2 de l'embrayage comporte une première boucle dite boucle fermée qui permet d'estimer le couple transmis effectivement par l'embrayage lorsque celui-ci fonctionne en mode glissement, à partir d'une mesure de la position effective de l'actionneur de l'embrayage Xemb,mes et de mesures du couple moteur Cmot et du régime moteur Wmot du moteur d'entraînement du couple d'entrée de l'arbre d'entrée de l'embrayage, cet estimateur donnant une grandeur Cemb,bf qui est comparée à la consigne d'embrayage fournie par le système de pilotage de la chaîne de traction. Un tel estimateur, qui utilise notamment une modélisation du comportement dynamique de la chaîne de traction, est connu en lui-même de l'homme du métier.

La consigne de couple pour l'embrayage Cemb,cons et l'estimation en boucle fermée du couple effectivement transmis par l'embrayage Cemb,bf sont comparées dans un premier comparateur 4 qui fait la différence entre ces deux couples. Cette différence est envoyée en entrée dans un module de calcul d'un couple de régulation Cemb,r qui est la consigne de couple qui va servir à déterminer la consigne de positionnement de réglage des moyens de commande de l'embrayage. Un tel module de calcul du couple de régulation est connu en lui-même de l'homme du métier.

Le couple de régulation Cemb,r est transformé par un module 6 en une consigne de position pour l'actionneur de l'embrayage Xemb,cons. Le module 6 utilise une loi de comportement de l'embrayage à l'instant t Cemb(Xemb ; t) qui détermine la relation entre le couple maximum transmissible par l'embrayage et la position de l'organe de commande.

La consigne de position de l'actionneur Xemb,cons est envoyée dans un module 7 de modélisation dynamique de l'embrayage qui prend en compte la dynamique de positionnement des moyens d'action de l'embrayage, et par conséquent prend en compte les décalages dans le temps, pour déterminer la position théorique de l'organe de commande de l'embrayage à l'instant t. Cette valeur est alors transformée par un module 6' qui utilise la même loi de comportement de l'embrayage que le module 6, en une estimation en boucle ouverte Cemb,bo du couple maximum que pourrait transmettre l'embrayage à l'instant t.

On notera que dans la boucle fermée, la position effective de l'embrayage mesurée Xemb,mes est transformée en une estimation de couple Cemb,mes à l'aide d'un module 6" utilisant la loi de comportement de l'embrayage.

On notera également que les trois lois de comportement de l'embrayage 6, 6' et 6" sont identiques à l'instant t.

Afin de tenir compte des évolutions du comportement de l'embrayage en fonction du temps, la loi utilisée par les modules 6, 6' et 6" est adaptée à l'aide d'une procédure d'auto-adaptation qui prend en compte une comparaison dans un comparateur 8, de l'estimation en boucle ouverte Cemb,bo du couple maximum que peut transmettre l'embrayage à l'instant t, et de l'estimation en boucle fermée du couple effectivement transmis par l'embrayage à l'instant t Cemb,bf. La différence entre ces deux estimations en boucle ouverte et en boucle fermée du couple transmissible ou transmis par l'embrayage est utilisée pour adapter les lois de comportement de l'embrayage à l'aide d'un module 9 d'auto-adaptation qui utilise des procédures du type intégration en utilisant des gains qui peuvent être ajustés en fonction du comportement que l'on souhaite pour l'adaptation.

On va maintenant décrire le processus d'auto-adaptation qui est utilisé pour ajuster la représentation des lois de comportement de l'embrayage.

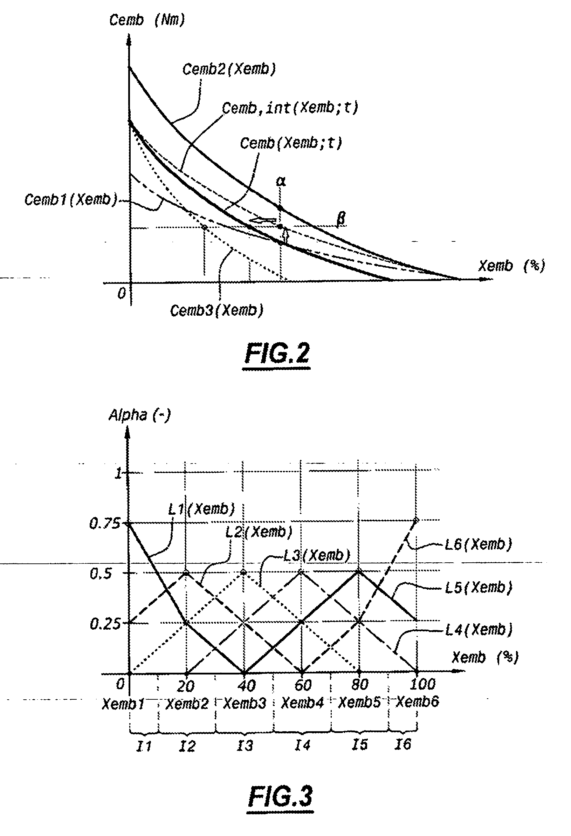

D'abord, et en faisant référence à la figure 2, on va définir les différentes lois de comportement de l'embrayage que l'on va utiliser.

On considère d'abord une première loi de comportement Cemb1(Xemb) qui représente la loi de comportement de l'embrayage lorsqu'il est neuf et froid, c'est-à-dire lorsque les garnitures ne sont pas usées ni échauffées par une utilisation. On considère également une deuxième loi de comportement de l'embrayage Cemb2(Xemb) qui correspond au comportement de l'embrayage neuf chaud, c'est-à-dire de l'embrayage neuf lorsqu'il a été utilisé et qu'il est à sa température maximale d'utilisation. Ces deux courbes sont décalées l'une par rapport à l'autre du fait des dilatations engendrées par l'échauffement de l'embrayage. Par interpolation à l'aide d'une fonction d'interpolation a qui dépend du temps et qui dépend de la position Xemb de l'actionneur (ou organe de commande) de l'embrayage, on peut déterminer la loi de comportement de l'embrayage à l'état neuf à un instant t déterminé, c'est-à-dire à une certaine température qui est fonction des conditions de l'utilisation de l'embrayage. Cette loi intermédiaire Cemb,int, (Xemb,t) correspond à la loi de comportement de l'embrayage à l'état neuf dans les conditions effectives d'utilisation. Cette loi peut s'écrire sous la forme Cemb,int (Xemb,t) = $\alpha$(Xemb,t) x Cemb1(Xemb) + [1 - $\alpha$(Xemb,t)] x Cemb2(Xemb).

On utilise enfin une troisième loi Cemb3(Xemb) qui correspond à la loi de comportement de l'embrayage lorsqu'il est usé et qui est décalée par rapport aux autres lois du fait notamment de l'usure des garnitures de l'embrayage qui modifie donc la géométrie de l'embrayage. Cette loi se caractérise par le fait que le point de contact des deux plateaux de l'embrayage est sensiblement décalé par rapport à ce qu'il est lorsque l'embrayage est neuf. En outre, la raideur du mécanisme de commande et les caractéristiques des matériaux de friction évoluent au cours de la vie de l'embrayage.

Pour représenter la loi réelle de comportement de l'embrayage à utiliser à un instant t correspondant aux conditions effectives d'utilisation de l'embrayage et à ses conditions d'usure, on utilise une loi Cemb(Xemb,t) obtenue par une interpolation entre la loi de comportement intermédiaire de l'embrayage et la loi de comportement de l'embrayage usé. Pour faire cette interpolation on utilise un coefficient d'interpolation $\beta$ qui est tel qu'à couple maximal transmissible par l'embrayage donné, la position Xemb du moyen de commande de l'embrayage effectif s'obtient par une interpolation linéaire entre les consignes de positionnement du moyen de commande de l'embrayage, d'une part, lorsque l'embrayage est complètement usé et, d'autre part, lorsque l'embrayage suit la loi de comportement intermédiaire de l'embrayage telle qu'elle vient d'être définie.

Si on appelle Xemb,int (Cemb,t), la position de l'actionneur défini par la loi intermédiaire valable à l'instant t, pour obtenir un couple maximal transmissible-Cemb, Xemb3 (Cemb), la position de l'actionneur défini par la loi correspondant à l'embrayage complètement usé, permettant d'obtenir le même couple, et Xemb (Cemb,t), la position qu'il faut donner à l'actionneur à l'instant t pour obtenir le couple Cemb, compte tenu de l'échauffement et de l'usure de l'embrayage, alors on a :

$$\text{Xemb (Cemb,t)} = \beta\text{Xemb,int (Cemb,t)} + (1 - \beta)\ \text{Xemb3 (Cemb)}.$$

Compte tenu de ces différentes caractéristiques des lois de comportement de l'embrayage et des lois théoriques à l'état neuf froid, à l'état neuf chaud et à l'état usé, il apparaît que la comparaison de la consigne de couple maximal transmis par l'embrayage en boucle ouverte Cemb,bo et de l'estimation en boucle fermée du couple effectivement transmis par l'embrayage Cemb,bf, permet d'estimer comment doivent varier, en fonction du temps, les interpolations entre les différentes lois théoriques de comportement de l'embrayage.

En particulier, si l'estimation du couple en boucle fermée est supérieure à l'estimation du couple en boucle ouverte, cela signifie que dans l'interpolation qui fait intervenir la loi de comportement de l'embrayage à l'état neuf froid et le comportement de l'embrayage à l'état neuf chaud, donne un poids trop important à la loi de comportement de l'embrayage à l'état neuf froid. Dans ces conditions, il est souhaitable de diminuer la valeur de la fonction $\alpha$ d'interpolation.

En effet, l'estimation du couple en boucle ouverte correspond à la valeur calculée à partir de la loi de comportement estimée de l'embrayage, et l'estimation en boucle fermée est voisine du couple réel. De ce fait, lorsque l'estimation en boucle fermée est supérieure à l'estimation en boucle ouverte, on peut conclure que la loi de comportement estimée de l'embrayage sous-estime le couple transmis par l'embrayage.

Or, dans l'exemple considéré, à position donnée Xemb de l'actionneur de l'embrayage, le couple calculé pour l'embrayage froid est inférieur au couple calculé pour l'embrayage chaud.

Dans ces conditions, si la fonction $\alpha$ est trop importante, la loi de comportement estimée de l'embrayage sous-estime le couple transmis.

De ce fait, dans le cas de l'exemple, lorsque le couple estimé en boucle ouverte est inférieur au couple estimé en boucle fermée, cela signifie que la fonction $\alpha$ est trop importante.

Inversement, si l'estimation du couple en boucle fermée est inférieure à l'estimation du couple en boucle ouverte, il est souhaitable de faire évoluer la fonction d'interpolation $\alpha$ en sens inverse.

On notera que les sens de variation indiqués ici peuvent dépendre du mode de construction et de fonctionnement de l'embrayage. L'homme du métier sait faire les adaptations à tous les cas particuliers.

Ainsi, pour assurer l'adaptation de la loi de comportement, on introduit dans le système de régulation une procédure d'adaptation de la fonction d'interpolation $\alpha$ qui consiste à faire évoluer cette fonction de telle sorte que la dérivée par rapport au temps de la valeur de la fonction $\alpha$ est proportionnelle à l'écart constaté entre l'estimation du couple en boucle fermée et l'estimation du couple en boucle ouverte. Le coefficient de proportionnalité est un gain $K_\alpha$.

Une telle adaptation sur laquelle on reviendra ultérieurement, a l'avantage de prendre en compte les phénomènes d'échauffement de l'embrayage, c'est-à-dire les phénomènes qui ont lieu pendant une période d'utilisation de l'embrayage, mais ont l'inconvénient de ne pas prendre en compte les phénomènes d'usure.

Afin de prendre en compte les phénomènes d'usure, on est amené à adapter le coefficient β de la deuxième interpolation qui a été décrite précédemment. Des raisonnements similaires à ceux qui sont effectués pour l'adaptation du coefficient α montrent que le coefficient β doit être adapté en fonction de l'écart entre l'estimation du couple en boucle fermée et l'estimation du couple en boucle ouverte de façon inverse de celle de la fonction α, et avec une vitesse d'adaptation beaucoup plus faible. On utilise donc pour adapter le coefficient β une loi qui est telle que la dérivée du coefficient β par rapport au temps est proportionnelle à l'écart constaté entre l'estimation du couple en boucle fermée et l'estimation du couple en boucle ouverte, avec un coefficient de proportionnalité, ou gain $K_\beta$ beaucoup plus petit en valeurs absolue que le coefficient $K_\alpha$ et de signe contraire au coefficient $K_\alpha$. La combinaison de ces deux adaptations conduit à une courbe de comportement Cemb(Xemb, t), qui prend en compte à la fois l'échauffement de l'embrayage et l'usure.

Etant donné que l'échauffement de l'embrayage est un phénomène variable qui intervient uniquement pendant les périodes d'utilisation de l'embrayage et qui disparaît lorsque l'embrayage est laissé au repos un certain temps alors que le phénomène d'usure est un phénomène permanent, les adaptations de la fonction d'interpolation α et du coefficient d'interpolation β sont différentes.

En particulier, pour l'interpolation utilisant la fonction d'interpolation α, les résultats de l'interpolation sont annulés après chaque période de non utilisation de l'embrayage suffisamment longue pour que sa température revienne à la température normale. En revanche, les adaptations du coefficient β sont cumulées tout au long de la vie de l'embrayage.

En procédant ainsi, on obtient des courbes de comportement de l'embrayage qui sont auto-adaptées, non seulement en fonction des utilisations instantanées de l'embrayage mais également en fonction des utilisations antérieures. De ce fait, en procédant ainsi, on obtient une loi de commande de l'embrayage qui correspond à l'état réel de l'embrayage au moment où on l'utilise.

Comme indiqué précédemment, l'interpolation entre la loi de comportement intermédiaire de l'embrayage et la loi de comportement de l'embrayage lorsqu'il est complètement usé se fait à l'aide d'un seul coefficient d'interpolation β. En revanche, l'interpolation entre une loi de comportement de l'embrayage neuf et une loi de comportement de l'embrayage à chaud, se fait de préférence par une interpolation qui n'est pas constante sur l'ensemble de la plage de fonctionnement de l'embrayage mais qui se fait intervalle de fonctionnement par intervalle de fonctionnement de l'embrayage comme on va l'expliquer maintenant et, de ce fait, on utilise non pas un coefficient d'interpolation mais une fonction d'interpolation α(Xemb, t) qui, non seulement varie avec le temps, comme le coefficient β, mais qui, en outre, dépend de la position Xemb de l'organe de commande de l'embrayage.

Pour cela, et comme représenté à la figure 3, on divise la plage de variation de la position du moyen de la commande de l'embrayage Xemb, en un certain nombre de segments, par exemple, comme indiqué sur la figure, en six segments, un premier segment 11 qui correspond à un serrage entre 0 et 10%, un deuxième segment 12 centré sur 20% et qui correspond à l'intervalle entre 10 et 30%, un intervalle 13 centré sur 40%, un intervalle $I_4$ centré sur 60%, un intervalle $I_5$ centré sur 80%, et un intervalle $I_6$ qui va de 90 à 100%. Pour chacun de ces intervalles, on peut définir un coefficient d'interpolation α0 pour le premier intervalle, α20 pour le deuxième intervalle, α40 pour le troisième intervalle, α60 pour le quatrième, α80 pour le cinquième, α100 pour le dernier intervalle. On définit également des fonctions de lissage qui sont représentées à la figure 3, qui correspondent à chacun des intervalles et qui sont telles que la somme de ces fonctions de lissage pour un point quelconque de réglage du moyen de commande de l'embrayage, est égale à 1. Ces fonctions sont appelées respectivement Li(Xemb), $L_2$(Xemb), $L_3$(Xemb), $L_4$(Xemb), $L_5$(Xemb), $L_6$(Xemb). Chaque fonction de lissage induit une pondération sur l'intervalle $I_x$ auquel elle est associée, ainsi que sur les intervalles $I_{x-1}$ et $I_x$ + 1 adjacents et, ainsi engendre un lissage. On définit alors la fonction globale d'interpolation α(Xemb) égale à la somme des produits des coefficients d'interpolation par les fonctions de lissage des intervalles correspondants :

$$\alpha(Xemb) = \alpha 0 \times L1(Xemb) + \alpha 20 \times L2(Xemb) + \ldots + \alpha 100 \times L6(Xemb).$$

Pour effectuer l'adaptation, à chaque instant t on détermine dans quel intervalle de fonctionnement se situe l'embrayage et on fait l'adaptation du coefficient αi de l'intervalle correspondant. Au cours de la vie de l'embrayage on effectue donc intervalle par intervalle les adaptations des différents coefficients de l'interpolation, ce qui permet, en les introduisant dans la formule qui définit la fonction d'interpolation, d'adapter cette fonction d'interpolation. Cette interpolation par segment se fait uniquement sur le coefficient α qui correspond à la prise en compte de l'échauffement de l'embrayage. En effet, le phénomène d'échauffement a des effets fonction de la page de fonctionnement de l'embrayage. L'utilisation des fonctions de lissage telles qu'elles ont été décrites présente l'avantage d'éviter que cette auto-adaptation par segment conduise à des irrégularités dans l'évolution de la loi de comportement de l'embrayage calculé, évolution irrégulière qui pourrait conduire à des difficultés pour le pilotage de l'embrayage. En particulier, ce lissage évite qu'il y ait des non monotonies de la loi de comportement de l'embrayage qui conduiraient à des impossibilités d'inversion.

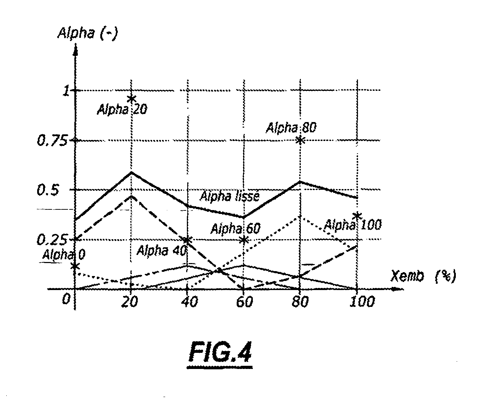

Comme on peut le voir sur la figure 4 qui donne un exemple des courbes d'interpolation après une certaine adaptation, les coefficients d'interpolation α0, α20, α40, α60, etc..., ont sensiblement varié par rapport à la valeur d'initialisation qui était égale à 0,5, si bien que le poids de chacune des lois de lissage a changé significativement, ce qui conduit à la fonction d'interpolation lissée représentée à la figure 4.

Le procédé d'auto-adaptation qui vient d'être décrit prend en compte deux interpolations, l'une correspondant à l'échauffement de l'embrayage, l'autre à l'usure. De plus, l'une des interpolations est complexe puisqu'elle se fait par segments. Mais on peut réaliser des auto-adaptations plus simples, par exemple en ne faisant qu'une interpolation et une loi relative à l'embrayage neuf chaud et l'embrayage usé, et/ou en ne segmentant pas l'une des interpolations.

Ce procédé peut être mis en oeuvre par un dispositif de pilotage qui comprend un ordinateur, adapté pour piloter un dispositif de couplage/découplage tel qu'un embrayage d'une chaîne de traction, par exemple d'un véhicule et notamment d'un véhicule automobile.

**Revendications**

1. Procédé de pilotage d'un dispositif de couplage entre un arbre d'entrée entraîné par un moteur et un arbre de sortie, pouvant transmettre un couple maximal (Cemb) fonction de la position (Xemb) d'un actionneur du dispositif de couplage conformément à une loi de comportement du moyen de couplage dépendant du temps (Cemb = Cemb (Xemb ; t)), selon lequel, à chaque instant :

   - on définit une consigne (Cemb,cons) de couple maximal à transmettre,
   - on mesure la position réelle (Xemb,mes) de l'actionneur du dispositif de couplage,
   - en utilisant la consigne de couple maximal à transmettre, (Cemb,cons), la mesure réelle de la position de l'actionneur (Xemb,mes) et la loi de comportement du moyen de couplage à l'instant t (Cemb(Xemb ; t)), on détermine une consigne (Xemb,cons) pour l'actionneur du dispositif de couplage qu'on envoie à l'actionneur du dispositif de couplage,
   - en utilisant une loi de comportement du moyen de couplage à l'instant t obtenue par interpolation entre une première loi de référence de comportement du moyen de couplage (Cemb1(Xemb)) et au moins une deuxième loi de référence de comportement du moyen de couplage (Cemb2(Xemb), Cemb3(Xemb)), et

   **caracterisé en ce qu'** on effectue une auto adaptation de l'interpolation de la loi de comportement du moyen de couplage par intégration de l'écart entre l'estimation en boucle ouverte (Cemb, bo(t)) du couple maximal que le dispositif de couplage peut transmettre à un instant t et l'estimation en boucle fermée (Cemb, bf(t)) du couple que le dispositif de couplage transmet à l'instant t,
   **caractérisé en ce qu'**on effectue au moins une interpolation entre une première loi de référence (Cemb1(Xemb)) et une deuxième loi de référence (Cemb2(Xemb)) pour déterminer par interpolation à l'aide d'une fonction d'interpolation α(Xemb;t) dépendant de la position (Xemb) de l'actionneur du dispositif de couplage, une loi de comportement intermédiaire à l'instant t (Cemb, int (Xemb ; t)) qu'on utilise pour déterminer la loi de comportement du moyen de couplage, **en ce que** la fonction d'interpolation est adaptée avec un premier gain Kα,
   **en ce qu'**on divise la plage de variation de la position de l'actionneur du dispositif de couplage en une pluralité d'intervalles, et **en ce qu'**on effectue l'adaptation de la fonction d'interpolation intervalle par intervalle.

2. Procédé selon la revendication 1, **caractérisé en ce qu'**on effectue un lissage de la fonction d'interpolation.

3. Procédé selon l'une quelconque des revendications 1 à 2, **caractérisé en ce que** la loi de comportement à l'instant t du dispositif de couplage (Cemb(Xemb ;t)) est égale à la loi de comportement intermédiaire à l'instant t du dispositif de couplage (Cemb, int (Xemb,t)).

4. Procédé selon l'une quelconque des revendications 1 à 3, **caractérisé en ce que** la première loi de référence est la loi de comportement du moyen de couplage lorsqu'il est neuf et froid et la deuxième loi de référence est la loi de comportement du moyen de couplage lorsqu'il est neuf et chaud, **en ce qu'**on effectue une interpolation entre la loi de comportement intermédiaire à l'instant t et une troisième loi de référence (Cemb3(Xemb)) correspondant au dispositif de couplage usé, en utilisant un coefficient d'interpolation β, et **en ce qu'**on adapte le coefficient d'interpolation β en utilisant un deuxième gain Kβ, de signe contraire au premier gain Kα et petit en valeur absolue par rapport au premier gain.

5. Procédé selon la revendication 4, **caractérisé en ce qu'**on effectue l'adaptation du deuxième coefficient d'interpolation β de façon continue tout au long de la vie du dispositif de couplage et **en ce qu'**on effectue l'adaptation du premier coefficient de couplage, période d'utilisation du dispositif par période d'utilisation, en le réinitialisant au début de chaque période d'utilisation.

6. Procédé selon l'une quelconque des revendications 1 à 5, **caractérisé en ce que** le dispositif de couplage est un embrayage commandé.

7. Procédé selon l'une quelconque des revendications 1 à 16, **caractérisé en ce que** le dispositif de couplage est incorporé dans une chaîne de traction et notamment une chaîne de traction hybride d'un véhicule automobile.

8. Dispositif de couplage entre un arbre d'entrée et un arbre de sortie tel qu'un embrayage, comprenant un moyen de pilotage, **caractérisé en ce que** le moyen de pilotage est adapté pour mettre en oeuvre le procédé selon l'une quelconque des revendications 1 à 6.

9. Dispositif de couplage selon la revendication 8, **caractérisé en ce qu'**il est incorporé dans la chaîne de traction d'un véhicule automobile.

**Claims**

1. A method for controlling a coupling device between an input shaft driven by a motor and an output shaft, being able to transmit a maximum torque (Cemb) as a function of the position (Xemb) of an actuator of the coupling device complying with a law of behaviour of the coupling means dependent on time (Cemb = Cemb (Xemb ; t)), according to which, at each moment:

   - a set value (Cemb,cons) of maximum torque to be transmitted is defined,
   - the actual position (Xemb,mes) of the actuator of the coupling device is measured,
   - using the set value of the maximum torque to be transmitted (Cemb,cons), the actual measurement of the position of the actuator (Xemb,mes) and the law of behaviour of the coupling means at the moment t (Cemb (Xemb ; t)), a set value (Xemb,cons) is determined for the actuator of the coupling device which is sent to the actuator of the coupling device,
   - using a law of behaviour of the coupling means at the moment t obtained by interpolation between a first law of reference of behaviour of the coupling means (Cemb1(Xemb)) and at least a second law of reference of behaviour of the coupling means (Cemb2(Xemb), Cemb3(Xemb)), and

   **characterized in that**
   an auto-adaptation of the interpolation of the law of behaviour of the coupling means by integration of the difference between the estimation in open loop (Cemb, bo(t)) of the maximum torque which the coupling device can transmit at a moment t and the estimation in closed loop (Cemb, bf(t)) of the torque which the coupling device transmits at the moment t,
   **characterized in that** at least one interpolation is carried out between a first law of reference (Cemb1(Xemb)) and a second law of reference (Cemb2(Xemb)) to determine by interpolation by means of an interpolation function $\alpha$ (Xemb;t) depending on the position (Xemb) of the actuator of the coupling device, an intermediate law of behaviour at the moment t (Cemb, int (Xemb ; t)) which is used to determine the law of behaviour of the coupling means, **in that** the interpolation function is adapted with a first gain K$\alpha$, **in that** the range of variation of the position of the actuator of the coupling device is divided into a plurality of intervals, and **in that** the adaptation of the interpolation function is carried out interval by interval.

2. The method according to Claim 1, **characterized in that** a smoothing of the interpolation function is carried out.

3. The method according to any one of Claims 1 to 2, **characterized in that** the law of behaviour at the moment t of the coupling device (Cemb(Xemb ; t)) is equal to the intermediate law of behaviour at the moment t of the coupling device (Cemb, int (Xemb,t)).

4. The method according to any one of Claims 1 to 3, **characterized in that** the first law of reference is the law of behaviour of the coupling means when it is new and cold and the second law of reference is the law of behaviour of the coupling means when it is new and warm, **in that** an interpolation is carried out between the intermediate law of behaviour at the moment t and a third law of reference (Cemb3(Xemb)) corresponding to the worn coupling device, using an interpolation coefficient $\beta$, and **in that** the interpolation coefficient $\beta$ is adapted using a second gain K$_\beta$ of

the opposite sign to the first gain $K_\alpha$ and small in absolute value with respect to the first gain.

5. The method according to Claim 4, **characterized in that** the adaptation of the second coefficient of interpolation β is carried out continuously throughout the life of the coupling device and **in that** the adaptation of the first coupling coefficient is carried out period of use of the device by period of use, reinitialising it at the start of each period of use.

6. The method according to any one of Claims 1 to 5, **characterized in that** the coupling device is a controlled clutch.

7. The method according to any one of Claims 1 to 6, **characterized in that** the coupling device is incorporated in a drive chain and in particular a hybrid drive chain of a motor vehicle.

8. A coupling device between an input shaft and an output shaft such as a clutch, comprising a controlling means, **characterized in that** the controlling means is suited to implement the method according to any one of Claims 1 to 6.

9. The coupling device according to Claim 8, **characterized in that** it is incorporated in the drive train of a motor vehicle.


**Patentansprüche**

1. Verfahren zum Steuern einer Vorrichtung zum Kuppeln zwischen einer Eingangswelle, die von einem Motor angetrieben wird, und einer Ausgangswelle, die ein maximales Moment (Cemb) übertragen kann, das von der Position (Xemb) eines Stellantriebs der Kupplungsvorrichtung gemäß einem Verhaltensgesetz des Kupplungsmittels abhängt, das von der Zeit (Cemb = Cemb (Xemb; t)) abhängt, gemäß dem man in jedem Augenblick:

   - einen Sollwert (Cemb, cons) für das maximal zu übertragende Moment definiert,
   - die reale Position (Xemb, mes) des Stellantriebs der Kupplungsvorrichtung misst,
   - unter Einsatz des Sollwerts des maximal zu übertragenden Moments (Cemb, cons), der realen Messung der Position des Stellantriebs (Xemb, mes) und dem Verhaltensgesetz des Kupplungsmittels im Augenblick t (Cemb (Xemb; t)) einen Sollwert (Xemb, cons) für den Stellantrieb der Kupplungsvorrichtung bestimmt, den man an den Stellantrieb der Kupplungsvorrichtung sendet,
   - unter Einsatz eines Verhaltensgesetzes des Kupplungsmittels im Augenblick t, erzielt durch Interpolation zwischen einem ersten Verhaltensbezugsgesetz des Kupplungsmittels (Cemb1(Xemb)) und mindestens einem zweiten Verhaltensbezugsgesetz des Kupplungsmittels (Cemb2(Xemb), Cemb3(Xemb)), und

   **gekennzeichnet durch**
   eine Selbstanpassung der Interpolation des Verhaltsgesetzes des Kupplungsmittels **durch** Integration der Abweichung zwischen der Schätzung in offener Schleife (Cemb, bo(t)) des maximalen Moments, das die Kupplungsvorrichtung in einem Augenblick t übertragen kann, und der Schätzung in geschlossener Schleife (Cemb, bf(t)) des Moments, das die Kupplungsvorrichtung im Augenblick t überträgt,
   **dadurch gekennzeichnet, dass** man mindestens eine Interpolation zwischen einem ersten Bezugsgesetz (Cemb1 (Xemb)) und einem zweiten Bezugsgesetz (Cemb2(Xemb)) ausführt, um **durch** Interpolation mit Hilfe einer Interpolationsfunktion $\alpha((Xemb;t)$, abhängig von der Stellung (Xemb) des Stellantriebs der Kupplungsvorrichtung, ein Zwischenverhaltensgesetz im Augenblick t (Cemb, int(xemb; t)) zu bestimmen, das man verwendet, um das Verhaltensgesetz des Kupplungsmittels zu bestimmen, und dass die Interpolationsfunktion mit einer ersten Verstärkung $K_\alpha$ angepasst wird,
   und dass man den Schwankungsbereich der Stellung des Stellantriebs der Kupplungsvorrichtung in eine Vielzahl von Intervallen unterteilt, und dass man das Anpassen der Interpolationsfunktion intervallweise ausführt.

2. Verfahren nach Anspruch 1, **dadurch gekennzeichnet, dass** man ein Glätten der Interpolationsfunktion ausführt.

3. Verfahren nach einem der Ansprüche 1 bis 2, **dadurch gekennzeichnet, dass** das Gesetz des Verhaltens im Augenblick t der Kupplungsvorrichtung (Cemb(Xemb;t)) gleich dem Verhaltenszwischengesetz im Augenblick t der Kupplungsvorrichtung (Cemb, int(Xemb, t)) ist;

4. Verfahren nach einem der Ansprüche 1 bis 3, **dadurch gekennzeichnet, dass** das erste Bezugsgesetz das Verhaltensgesetz des Kupplungsmittels ist, wenn es neu und kalt ist, und dass das zweite Bezugsgesetz das Verhaltensgesetz des Kupplungsmittels ist, wenn es neu und warm ist, und dass man eine Interpolation zwischen dem Verhaltenszwischengesetz im Augenblick t und einem dritten Bezugsgesetz (Cemb3(Xemb)), das der abgenutzten Kupplungsvorrichtung entspricht, ausführt, indem man einen Interpolationskoeffizienten β verwendet, und dass man den Interpolationskoeffizenten β durch Verwenden einer zweiten Verstärkung $K_\beta$ mit gegenteiligem Vorzeichen zu dem der ersten Verstärkung $K\alpha$ und im Absolutwert verglichen mit der ersten Verstärkung klein anpasst.

5. Verfahren nach Anspruch 4, **dadurch gekennzeichnet, dass** man die Anpassung des zweiten Interpolationskoeffizienten β ununterbrochen während der ganzen Lebensdauer der Kupplungsvorrichtung anpasst, und dass man die Anpassung des ersten Kupplungskoeffizenten, eine Nutzungsperiode der Vorrichtung nach der anderen durch Neuinitialisieren zu Beginn jeder Nutzungsperiode vornimmt.

6. Verfahren nach einem der Ansprüche 1 bis 5, **dadurch gekennzeichnet, dass** die Kupplungsvorrichtung eine gesteuerte Kupplung ist.

7. Verfahren nach einem der Ansprüche 1 bis 6, **dadurch gekennzeichnet, dass** die Kupplungsvorrichtung in eine Zugkette und insbesondere in eine hybride Zugkette eines Kraftfahrzeugs eingebaut ist.

8. Vorrichtung zum Kuppeln zwischen einer Eingangswelle und einer Ausgangwelle, wie zum Beispiel ein Kupplung, die ein Steuermittel aufweist, **dadurch gekennzeichnet, dass** das Steuermittel das Verfahren nach einem der Ansprüche 1 bis 6 umsetzen kann.

9. Vorrichtung zum Kuppeln nach Anspruch 8, **dadurch gekennzeichnet, dass** sie in die Zugkette eines Kraftfahrzeugs eingebaut ist.

**FIG.1**

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1437520 A2